# FASCICULE DE BREVET EUROPEEN

(11) **EP 2 504 158 B1**
(45) Date de publication et mention de la délivrance du brevet: **05.03.2014**
(21) Numéro de dépôt: 10803607.0
(22) Date de dépôt: 24.11.2010
(51) Int. Cl.: B29D 30/06, B29C 33/20

(54) **PRESSE DE CUISSON POUR EBAUCHE DE PNEUMATIQUE COMPRENANT UN COUVERCLE BASCULANT**
VULKANISIERUNGSPRESSE FÜR EINEN REIFENROHLING MIT SCHWENKBAREM DECKEL
VULCANISING PRESS FOR A TYRE BLANK INCLUDING A TILTABLE LID

(30) Priorité: 27.11.2009 FR 0958454
(43) Date de publication de la demande: 03.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: RIFFAULT, Patrick, F-63118 Cebazat (FR)
(74) Mandataire: Noel, Luminita
(86) Numéro de dépôt international: PCT/FR2010/052511
(87) Numéro de publication internationale: WO 2011/064499

(56) Documents cités:
- DE-B- 1 027 392
- DE-B- 1 120 116
- GB-A- 989 203
- US-A- 2 495 663
- US-A- 2 809 396
- US-A- 4 360 335

## Description

L'invention concerne les presses de cuisson pour ébauches de pneumatique.

Il est connu de cuire une ébauche de pneumatique crue dans une presse pour effectuer sa mise en forme et sa vulcanisation. La presse comprend une cuve et un couvercle relié à la cuve par des glissières permettant son coulissement vertical. Les glissières sont montées pivotantes sur la cuve. Pour ouvrir la presse, on fait coulisser le couvercle vers le haut pour l'éloigner de la cuve puis on fait basculer les glissières afin de dégager le couvercle pour accéder à la cuve.

Dans cet agencement, la hauteur libre entre la cuve et le couvercle est limitée par le débattement vertical de ce dernier. Pour dégager autant que possible l'espace nécessaire pour accéder à la cuve afin de charger les moules et les bandages, il est nécessaire de faire basculer les glissières sur un angle prononcé. Cela implique une dépense d'énergie importante et génère un encombrement substantiel du côté de la presse où bascule le couvercle.

Une presse de cuisson pour ébauche de pneumatique est divulguée dans les documents US 4,360,335 et US 2,495,663.

Un but de l'invention est de faciliter l'accès à la cuve sans augmenter la dépense énergétique, ni l'encombrement de la machine.

A cet effet, on prévoit selon l'invention, une presse de cuisson pour ébauche de pneumatique, qui comprend :
- une cuve,
- un couvercle relié à la cuve par des organes de guidage à coulissement, le couvercle et la cuve étant chacun montés pivotant sur ces organes,
- le couvercle étant par ailleurs monté pivotant sur un axe guidé à coulissement par rapport à la cuve.

Ainsi, après avoir fait coulisser le couvercle vers le haut, lors du basculement des organes de guidage à coulissement, l'axe guidé à coulissement génère un basculement supplémentaire du couvercle par rapport à la cuve, ce qui dégage l'espace au-dessus de cette dernière. Sans modifier la longueur de la course de coulissement du couvercle au-dessus de la cuve, on augmente de façon importante la hauteur libre disponible entre la cuve et le couvercle. Parallèlement, cette plus grande hauteur est obtenue sans augmenter l'angle de basculement des organes de guidage, voire même tout en réduisant cet angle. Grâce à cet agencement, on peut aussi réduire la course des actionneurs manoeuvrant les organes de guidage à coulissement et réduire l'effort qu'ils produisent. Enfin, non seulement l'invention n'augmente pas l'encombrement de la machine du côté où le couvercle bascule mais elle permet de le réduire.

Avantageusement, l'axe s'étend plus bas qu'un axe reliant le couvercle aux organes de guidage à coulissement. Ainsi, l'axe supplémentaire entraîne le basculement du couvercle dans le même sens que son basculement généré par la manoeuvre des organes de guidage à coulissement, ce qui dégage d'autant plus l'ouverture au-dessus de la cuve.

La presse selon l'invention pourra présenter en outre au moins l'une quelconque des caractéristiques suivantes :
- la presse comprend un rail de guidage de l'axe;
- elle comprend un élément de guidage rectiligne et/ou vertical de l'axe;
- elle comprend une bielle rigidement solidaire du couvercle et portant l'axe ;
- elle comprend au moins un actionneur apte à faire pivoter les organes de guidage à coulissement par rapport à la cuve ;
- l'axe s'étend d'un même côté de la presse que l'actionneur ; et
- les organes de guidage à coulissement comprennent chacun une tige montée coulissante dans un fourreau ;

Avec la presse de l'invention, on peut éxécuter un procédé pour ouvrir une presse de cuisson pour ébauche de pneumatique, dans lequel :
- on fait coulisser vers le haut un couvercle de la presse par rapport à une cuve de la presse ;
- on fait basculer des organes de liaison du couvercle à la cuve ; et
- on fait basculer le couvercle par rapport aux organes de liaison.

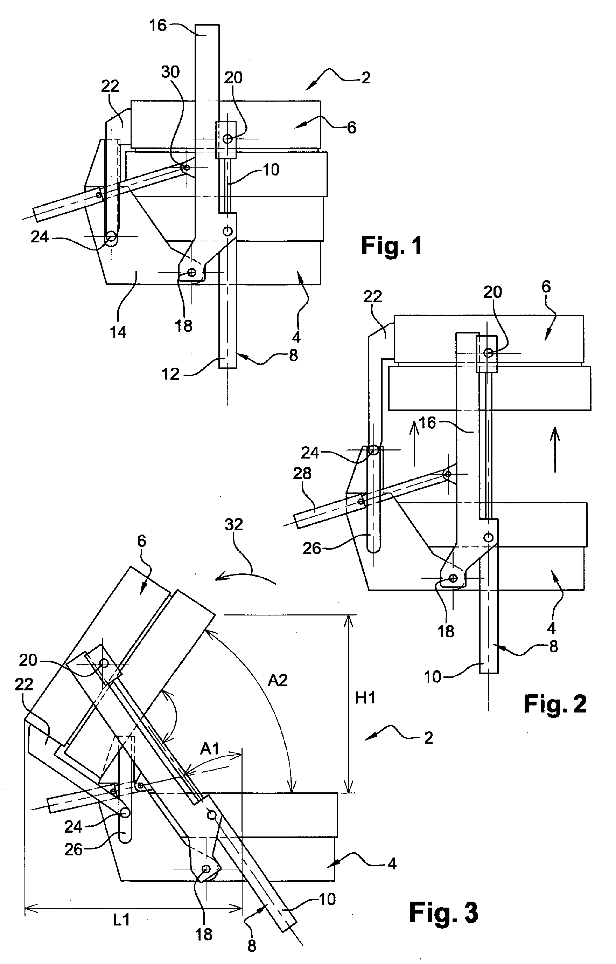

D'autres caractéristiques et avantages de l'invention apparaîtront encore dans la description suivante d'un mode de réalisation donné à titre d'exemple non limitatif en référence aux dessins annexés sur lesquels les figures 1 à 3 montrent une presse selon l'invention au cours de trois phases du mouvement d'ouverture de la presse après cuisson.

On utilise ici un repère orthogonal X, Y et Z dans lequel les directions X et Y sont horizontales et perpendiculaires entre elles, la direction Y étant perpendiculaire au plan des figures, et la direction Z, perpendiculaire aux directions X et Y, représente la direction verticale.

On a illustré sur les figures 1 à 3 une presse 2 selon l'invention. Il s'agit d'une presse de cuisson pour la vulcanisation d'ébauches crues de pneumatique pour des roues de véhicules de type léger, poids lourds ou génie civil.

La presse 2 comprend une cuve 4 destinée à recevoir le moule de cuisson qui lui-même reçoit l'ébauche et/ou les bandages. Cette cuve forme donc un réceptacle creux ouvert vers le haut. La presse comprend des moyens de cuisson, notamment par mise en circulation d'un fluide caloporteur, qui n'ont pas été détaillés.

La presse comprend un couvercle 6 apte à obturer une ouverture supérieure de la cuve. Elle comprend aussi des moyens de verrouillage de la presse en position fermée.

La presse comprend deux organes 8 assurant le guidage à coulissement du couvercle 6 par rapport à la cuve 4. Ces organes sont situés de part et d'autre de la cuve. Celui qui est visible sur les figures devant la cuve et le couvercle, masque l'autre qui est situé de l'autre côté de la cuve et du couvercle. Chaque organe de guidage 8 comprend en l'espèce une tige 10 montée mobile à coulissement dans un fourreau de guidage 12 coaxial à la tige.

La presse comprend une chape 14 rigidement solidaire de la cuve 4 et s'étendant en partie arrière de cette dernière.

La presse comprend pour chaque organe 8 un bras 16 rigidement solidaire du fourreau 12 à une extrémité supérieure du fourreau. Le bras 16 est monté pivotant sur la cuve 4 en étant monté directement pivotant sur la chape 14, autour d'un axe 18 parallèle à la direction Y.

La tige 10 est montée pivotante directement sur le couvercle 6 autour d'un axe de rotation 20 parallèle à la direction Y. L'axe passe par un plan vertical médian du couvercle.

Le couvercle porte une bielle 22 rigidement fixée à une face arrière de ce dernier. La bielle 22 présente une forme générale rectiligne. La bielle présente à son extrémité inférieure un arbre 24 formant un axe de rotation parallèle à la direction Y. La presse 2 comprend des moyens de guidage à coulissement de cet arbre par rapport à la cuve 4. Ces moyens sont formés dans le présent exemple par un rail ou une glissière rectiligne verticale 26 ménagée dans la chape 14 et donc solidaire rigidement de la cuve 4.

La presse 2 comprend des moyens de manoeuvre du bras 16 formés en l'espèce par des actionneurs constitués de vérins 28 dont l'extrémité distale est montée pivotante directement sur une portion médiane du bras 16. Son axe de rotation 30 s'étend au-dessus de l'axe 18 et au-dessous de l'axe 20.

Tous les axes de rotation précités sont parallèles à la direction Y.

Nous allons maintenant présenter le fonctionnement de la presse et le procédé.

A la figure 1, la presse est dans la configuration qu'elle occupe pendant la cuisson. Le couvercle 6 ferme la cuve 4. La tige 10, le fourreau 12 et la bielle 22 sont verticaux ainsi que le bras 16. La tige 10 a sa position la plus rentrée dans le fourreau 12.

En référence à la figure 2, pour ouvrir la presse, on actionne tout d'abord les organes de guidage à coulissement 8 grâce à des moyens qui n'ont pas été illustrés, afin de faire coulisser vers le haut le couvercle 6 par rapport à la cuve 4. Il s'agit donc, à ce stade, d'un mouvement de translation.

Une fois que le couvercle 6 a atteint sa fin de course supérieure en coulissement, on actionne les vérins 28 afin de solliciter les bras 16 vers l'arrière c'est-à-dire vers la gauche sur la figure 2. Cette action provoque la rotation de l'ensemble formé par les bras 16 et chaque organe 8 autour de l'axe 18, sur les figures dans le sens contraire à celui des aiguilles d'une montre indiqué par la flèche 32. Cette rotation entraîne quant à elle le pivotement de l'ensemble formé par le couvercle 6 et la bielle 22 autour de l'axe 24 et simultanément le coulissement de cet axe vers le bas dans la glissière 26. Cette rotation supplémentaire du couvercle est provoquée par la coopération de cet axe avec cette glissière. Il s'ensuit que le couvercle est mis en rotation par rapport aux organes de guidage à coulissement 8 autour de l'axe 20. De plus, le mouvement du couvercle par rapport à la cuve 4 provoqué par les vérins ne se réduit plus à une simple rotation. En effet, le mouvement du couvercle est cette fois la composée d'une rotation et d'une translation.

Ainsi, l'angle A2 que forme la face inférieure du couvercle par rapport à la face supérieure de la cuve est plus grand que dans l'art antérieur. De même, si l'on désigne par H1 la hauteur entre le point le plus haut de la face inférieure du couvercle et la face supérieure de la cuve, on obtient une hauteur plus grande que dans l'art antérieur. On obtient ainsi un meilleur accès à la cuve, qui permet de charger plus facilement les moules de cuisson et les enveloppes dans la presse. Simultanément, l'angle A1 de basculement des organes 10 par rapport à la direction verticale initiale peut être réduit par rapport à celui qui était nécessaire dans l'art antérieur. La course des vérins 28 et l'effort de poussée produit peuvent également être réduits. Il en est de même pour l'encombrement de la machine en partie arrière, à savoir sur la gauche des figures, mesuré par exemple par la longueur L1 séparant le point le plus en arrière de la face supérieure du couvercle ouvert et l'axe de symétrie principal vertical de la cuve.

L'invention permet donc de faire pivoter le couvercle 6 autour de l'axe 20 qui le relie aux organes de coulissement 8 pendant la phase de basculement vers l'arrière, de manière à augmenter l'angle relatif A2 entre le couvercle et la cuve sans augmenter l'angle de basculement A1, ni la course de basculement.

Bien entendu, on pourra apporter à l'invention de nombreuses modifications sans sortir du cadre de celle-ci. On pourra modifier la position des différents axes. On pourra modifier la constitution des moyens de guidage à coulissement et prévoir des systèmes à rails, à tringles, etc. La course de l'axe 24 lors du basculement du couvercle pourra être non verticale et/ou non rectiligne.

## Revendications

1. Presse (2) de cuisson pour ébauche de pneumatique **caractérisée en ce qu'**elle comprend :
- une cuve (4), et
- un couvercle (6) relié à la cuve par des organes de guidage à coulissement (8), le couvercle et la cuve étant chacun montés pivotants sur ces organes,
le couvercle (6) étant par ailleurs monté pivotant sur un axe (24) guidé à coulissement par rapport à la cuve.

2. Presse selon la revendication précédente dans lequel l'axe (24) s'étend plus bas qu'un axe (20) reliant le couvercle (6) aux organes de guidage à coulissement (8).

3. Presse selon l'une quelconque des revendications précédentes qui comprend un rail (26) de guidage de l'axe (24).

4. Presse selon l'une quelconque des revendications précédentes qui comprend un élément (26) de guidage rectiligne de l'axe (24).

5. Presse selon l'une quelconque des revendications précédentes qui comprend un élément (26) de guidage vertical de l'axe (24).

6. Presse selon l'une quelconque des revendications précédentes qui comprend une bielle (22) rigidement solidaire du couvercle (6) et portant l'axe (24).

7. Presse selon l'une quelconque des revendications précédentes qui comprend au moins un actionneur (28) apte à faire pivoter les organes de guidage à coulissement (8) par rapport à la cuve (4).

8. Presse selon la revendication précédente dans laquelle l'axe (24) s'étend d'un même côté de la presse que l'actionneur (28).

9. Presse selon l'une quelconque des revendications précédentes dans laquelle les organes de guidage à coulissement (8) comprennent chacun une tige (10) montée coulissante dans un fourreau (12).

## Patentansprüche

1. Vulkanisierungspresse (2) für einen Reifenrohling, **dadurch gekennzeichnet, dass** sie enthält:
- einen Bottich (4), und
- einen Deckel (6), der mit dem Bottich durch Gleitführungsorgane (8) verbunden ist, wobei der Deckel und der Bottich je schwenkbar auf diese Organe montiert sind,
wobei der Deckel (6) außerdem schwenkbar auf eine Achse (24) montiert ist, die bezüglich des Bottichs gleitend geführt wird.

2. Presse nach dem vorhergehenden Anspruch, wobei die Achse (24) sich tiefer erstreckt als eine Achse (20), die den Deckel (6) mit den Gleitführungsorganen (8) verbindet.

3. Presse nach einem der vorhergehenden Ansprüche, die eine Führungsschiene (26) der Achse (24) enthält.

4. Presse nach einem der vorhergehenden Ansprüche, die ein Element (26) zur geradlinigen Führung der Achse (24) enthält.

5. Presse nach einem der vorhergehenden Ansprüche, die ein Element (26) zur senkrechten Führung der Achse (24) enthält.

6. Presse nach einem der vorhergehenden Ansprüche, die eine Schubstange (22) enthält, die starr mit dem Deckel (6) verbunden ist und die Achse (24) trägt.

7. Presse nach einem der vorhergehenden Ansprüche, die mindestens einen Stellantrieb (28) enthält, der die Gleitführungsorgane (8) bezüglich des Bottichs (4) schwenken kann.

8. Presse nach dem vorhergehenden Anspruch, wobei die Achse (24) sich auf der gleichen Seite der Presse wie der Stellantrieb (28) erstreckt.

9. Presse nach einem der vorhergehenden Ansprüche, wobei die Gleitführungsorgane (8) je eine Stange (10) enthalten, die gleitend in einer Hülle (12) montiert ist.

## Claims

1. Curing press (2) for a tyre blank, **characterized in that** it comprises:
- a trough (4), and
- a cover (6) connected to the trough by means of sliding guide members (8), the cover and the trough each being pivotably mounted on these members,
the cover (6) being, moreover, pivotably mounted on an axle (24) guided slidably with respect to the trough.

2. Press according to the preceding claim, in which the axle (24) extends lower than an axle (20) connecting the cover (6) to the sliding guide members (8).

3. Press according to either one of the preceding claims, which comprises a rail (26) for guiding the axle (24).

4. Press according to any one of the preceding claims, which comprises an element (26) for rectilinearly guiding the axle (24).

5. Press according to any one of the preceding claims, which comprises an element (26) for vertically guiding the axle (24).

6. Press according to any one of the preceding claims, which comprises a connecting rod (22) rigidly fixed to the cover (6) and bearing the axle (24).

7. Press according to any one of the preceding claims, which comprises at least one actuator (28) capable of pivoting the sliding guide members (8) with respect to the trough (4).

8. Press according to the preceding claim, in which the axle (24) extends on one and the same side of the press as the actuator (28).

9. Press according to any one of the preceding claims, in which the sliding guide members (8) each comprise a rod (10) slidably mounted in a sleeve (12).
